# EUROPEAN PATENT APPLICATION

(11) **EP 2 302 311 A1**
(43) Date of publication of application: **30.03.2011**
(21) Application number: 09738646.0
(22) Date of filing: 30.04.2009
(51) Int. Cl.: F25B 30/06, F24F 3/00, F24F 5/00, F24J 3/08, F28D 15/02

(54) **HEAT EXCHANGER AND AIR CONDITIONING SYSTEM**

(30) Priority: 30.04.2008 JP 2008118211
(71) Applicant: Daikin Industries, Ltd., Osaka-shi, Osaka 530-8323 (JP)
(72) Inventor: ASAI, Hideaki, Sakai-shi Osaka 591-8511 (JP); KAWABATA, Katsuhiro, Sakai-shi Osaka 591-8511 (JP); TANIMOTO, Keisuke, Sakai-shi Osaka 591-8511 (JP); KANG, Yoonmyung, Sakai-shi Osaka 591-8511 (JP)
(74) Representative: Wiedemann, Peter
(86) International application number: PCT/JP2009/001969
(87) International publication number: WO 2009/133709

(57) **Abstract**

A heat exchanger installed under the ground or water includes an outer pipe (51) installed vertically or installed inclinedly under the ground or water; and a heating heat-transfer pipe (80) inserted into the outer pipe (51), and evaporating refrigerant injected thereto. A heat medium is sealed in the outer pipe (51). The outer pipe (sol) and the heating heat-transfer pipe (80) are arranged so that the liquid heat medium is guided between an inner wall surface of the outer pipe (51) and an outer wall surface of the cooling heat-transfer pipe (52).

## Description

### TECHNICAL FIELD

The present invention relates to a heat exchanger installed under the ground or water, and to an air conditioning system using the heat exchanger.

### BACKGROUND ART

An example of a so-called "heat-pump heating system" which performs heating by a refrigeration cycle is a system in which ground heat or heat contained in water is used as a heat source to evaporate refrigerant. For example, in a heat-pump heating system using ground heat, an underground heat exchanger for recovering ground heat from the ground is used (see, e.g., Patent Document 1). In the heat exchanger of Patent Document 1, a pipe (referred to as a "buried pipe" in the specification) filled with a heat medium is buried under the ground, and the heat medium inside the buried pipe is evaporated by ground heat. A pipe is branched from the buried pipe, and then the heat exchanger is attached to the branched pipe. Heat recovered in the heat exchanger is used as a heat source of the heat-pump heating system.

### CITATION LIST

### PATENT DOCUMENT

PATENT DOCUMENT 1: International Publication No. WO2004/111559

### SUMMARY OF THE INVENTION

### TECHNICAL PROBLEM

However, in, e.g., an underground heat exchanger collecting heat from soil, when using the compact underground heat exchanger, it is difficult to obtain a sufficient amount of heat with heat exchange capability of the conventional heat exchanger (underground heat exchanger) due to large heat transfer resistance of the soil. Thus, when an attempt is made to obtain a sufficient amount of heat in, e.g., a so-called "vertical underground heat exchanger" buried in the vertical direction, it is necessary to bury the underground heat exchanger to great depth. Specifically, there is an example in which a burial depth of approximately 100 m is required for an underground heat exchanger of a household heating system. Such a requirement of the burial depth of the underground heat exchanger causes a problem on its installation cost. As in Patent Document 1, the heat exchanger for refrigerant flowing through a heat pump is directly installed near the ground surface, and ground heat is recovered by using a change in phase of the heat medium. However, in the pipe, an area where working fluid is condensed is smaller than an area where the working fluid is evaporated, resulting in poor heat balance between the vaporization and the condensation. Although the condensed working fluid flows from an upper section of the pipe, a long wall surface of the pipe is not uniformly moistened. That is, a heat exchange using ground heat is not effectively performed.

In addition, in a broadly-used system in which water circulates inside the underground heat exchanger to use heat from such circulating water, a tube line for running water into the pipe buried to the above-described depth, and a pump for transferring the heat medium flowing in the tube are required, and therefore there is a problem that power consumption of the pump degrades efficiency of the entire heating system.

The present invention has been made in view of the foregoing problems, and it is an object of the invention to improve heat exchange capability in a heat exchanger arranged under the ground or water.

### SOLUTION TO THE PROBLEM

In order to solve the foregoing problems, a first aspect of the invention is intended for a heat exchanger including an outer pipe (51) installed vertically or installed inclinedly under the ground or water; a heating heat-transfer pipe (80) which is inserted into the outer pipe (51), and which evaporates refrigerant injected thereto; and a heat medium sealed in the outer pipe (51). In the heat exchanger, a heat exchange is performed by using a change in phase of the heat medium, and the outer pipe (51) and the heating heat-transfer pipe (80) are arranged so that the liquid heat medium is guided between an inner wall surface of the outer pipe (51) and an outer wall surface of the cooling heat-transfer pipe (52).

This allows a heat medium guiding section (52) to guide the heat medium condensed on an outer surface of the heating heat-transfer pipe (80) to the inner wall surface of the outer pipe (51). While the heat medium guided to the inner wall surface flows down along the inner wall surface, such a heat medium is adhered and spreads in a circumferential direction of the inner wall surface, thereby forming a liquid film.

A second aspect of the invention is intended for the heat exchanger of the first aspect of the invention, in which the heating heat-transfer pipe (80) is formed in coiled shape.

This allows the coiled heating heat-transfer pipe (80) to guide the condensed heat medium to the inner wall surface of the outer pipe (11).

A third aspect of the invention is intended for the heat exchanger of the first aspect of the invention, in which a wick (90) is provided along the inner wall surface of the outer pipe (51) inside the outer pipe (51).

Thus, the heat medium condensed on an outer side of the heating heat-transfer pipe (80) penetrates the wick (90), thereby allowing the heat medium to contact a broad area of the inner wall surface of the outer pipe (51).

A fourth aspect of the invention is intended for the heat exchanger of the first aspect of the invention, in which grooves (100) for holding the heat medium by using surface tension of the heat medium or by reducing an angle of contact on the inner wall surface are formed in the inner wall surface of the outer pipe (51).

This allows the grooves (100) to hold the liquid heat medium flowing in the outer pipe (51), and allows the held liquid refrigerant to contact the inner wall surface of the outer pipe (51).

A fifth aspect of the invention is intended for an air conditioning system including the heat exchanger of the first aspect of the invention, in which a refrigeration cycle is performed.

This allows the air conditioning system to perform a heating operation using ground heat as a heat source. In the heating operation, the heat medium condensed on the outer surface of the heating heat-transfer pipe (80) is guided to the inner wall surface of the outer pipe (51). While the heat medium guided to the inner wall surface flows down along the inner wall surface, such a heat medium is adhered to and spreads on the inner wall surface, thereby forming the liquid film. The heat medium forming the liquid film is evaporated again by collecting heat contained in the ground or water through the wall surface. The heat medium transfers heat contained in the ground or water to the heating heat-transfer pipe (80) which is a vaporization section of the air conditioning system, by using the change in phase upon evaporation/condensation.

### ADVANTAGES OF THE INVENTION

According to the first aspect of the invention, the condensed heat medium is adhered and spreads in the circumferential direction of the inner wall surface of the outer pipe (51), thereby forming the liquid film. Thus, a non-uniform flow of the heat medium and non-uniform moistening of the inner wall surface in a length direction (i.e., axial direction) of the outer pipe (51) can be reduced or prevented. This allows the liquid heat medium to be efficiently evaporated by contacting the inner wall surface of the outer pipe (51). Consequently, heat exchange efficiency of the heat exchanger is further improved.

According to the second aspect of the invention, the coiled heating heat-transfer pipe (80) guides the condensed heat medium to the inner wall surface of the outer pipe (51), and therefore a sufficient length of the heat medium guiding section (52) can be ensured. Consequently, the heat exchange efficiency is further improved.

According to the third aspect of the invention, the liquid heat medium flowing in the outer pipe (51) penetrates and is held in the wick (90), and the held liquid refrigerant contacts the inner wall surface of the outer pipe (51). Thus, uniform moistening of the inner wall surface of the outer pipe (51) can be ensured, thereby further improving the heat exchange capability.

According to the fourth aspect of the invention, the liquid heat medium flowing in the outer pipe (51) penetrate and is held in the grooves (100), and the held liquid refrigerant contacts the inner wall surface of the outer pipe (51). Thus, the uniform moistening of the inner wall surface of the outer pipe (51) can be ensured, thereby further improving the heat exchange capability.

According to the fifth aspect of the invention, in the air conditioning system, an outdoor unit (air heat exchanger) is not required, as well as defrosting operation is not required regardless of outdoor temperature. Thus, the heating operation can be performed with high efficiency. The liquid heat medium smoothly circulates in the outer pipe (51), and therefore a heat transfer using the change in phase of the heat medium is efficiently performed between the heating heat-transfer pipe (80) and the inner surface of the outer pipe (51). Consequently, the heat exchange capability of the heat exchanger in the heating operation is improved. Such improvement of the heat exchange capability allows a reduction in size of the heat exchanger, and a reduction in cost of a heating system can be also expected.

### BRIEF DESCRIPTION OF THE DRAWINGS

[FIG. 1] FIG. 1 is a system diagram of an air conditioning system including an underground heat exchanger of an embodiment of the present invention.
[FIG. 2] FIG. 2 is a longitudinal sectional view illustrating a configuration of the underground heat exchanger.
[FIG. 3] FIG. 3 is a view schematically illustrating a state in which the underground heat exchanger is installed under the ground.
[FIG. 4] FIG. 4 is a view illustrating a configuration of a heat medium guiding section, and movement of a heat medium.
[FIG. 5] FIG. 5 is a view schematically illustrating a state in which a heat exchanger (50) is installed under water.
[FIG. 6] FIGS. 6(A) and 6(B) are views schematically illustrating a state in which the heat exchanger (50) is inclinedly installed.
[FIG. 7] FIG. 7(A) is a cross-sectional view in an example of other configuration of an outer pipe. FIG. 7(B) is a perspective view with a part of the outer pipe being removed.
[FIG. 8] FIG. 8 is a cross-sectional view illustrating an example of other configuration of the outer pipe.

### DESCRIPTION OF EMBODIMENTS

Embodiments of the present invention will be described hereinafter with reference to the drawings. The embodiments below have been set forth merely for purposes of preferred examples in nature, and are not intended to limit the scope, applications, and use of the invention. In addition, in the description of embodiments and variations below, the same reference numeral is used throughout to refer to a component having the same function as that of a component which is first described, and the description thereof will not be repeated.

### «First Embodiment of the Invention»

In a first embodiment, a heat exchanger installed under the ground (underground heat exchanger) will be described as an example of a heat exchanger of the present invention.

The underground heat exchanger of the embodiments of the present invention is used for, e.g., a heat-pump air conditioning system which can perform a heating operation. The underground heat exchanger serves as an evaporator in the heating operation, and collects heat from soil. Note that the "soil" includes layers containing only dirt; water-bearing layers containing both of dirt and water; and rock layers in which rocks are successively distributed. That is, depending on a site and depth of installation, the underground heat exchanger may exchange heat with dirt, water contained in the ground, rocks, or all of them.

### <Entire Configuration of Air Conditioning System>

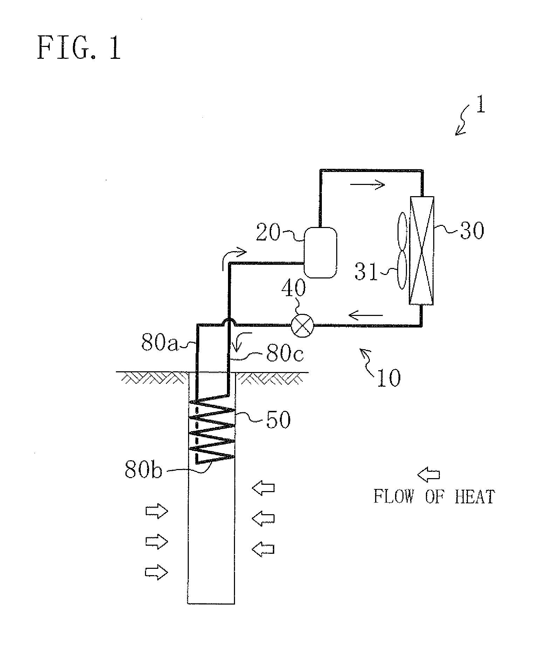

FIG. 1 is a system diagram of an air conditioning system (1) including a heat exchanger (underground heat exchanger) (50) of an embodiment of the present invention. As illustrated in FIG. 1, the air conditioning system (1) of the present embodiment includes a refrigerant circuit (10). A compressor (20), an indoor heat exchanger (30), an expansion valve (40), and the underground heat exchanger (50) are connected to the refrigerant circuit (10). The refrigerant circuit (10) is filled with refrigerant (working fluid).

The compressor (20) sucks refrigerant through a suction port to compress such refrigerant, and then discharges the compressed refrigerant through a discharge port. Specifically, various compressors such as a scroll compressor may be employed as the compressor (20). In the refrigerant circuit (10), the suction port of the compressor (20) is connected to the underground heat exchanger (50) (specifically, an exit section (80c) which will be described later), and the discharge port of the compressor (20) is connected to the indoor heat exchanger (30).

The indoor heat exchanger (30) is an air heat exchanger for exchanging heat between refrigerant and indoor air. In the air conditioning system (1), the indoor heat exchanger (30) is installed inside a so-called "indoor unit" arranged in a room to be heated, and dissipates heat of high-pressure refrigerant sent from the compressor (20), to indoor air. For example, a cross-fin type fin-and-tube heat exchanger may be employed as the indoor heat exchanger (30). An outflow hole of the indoor heat exchanger (30) is connected to an inflow hole of the expansion valve (40), and refrigerant from which heat is dissipated flows out to the expansion valve (40) through such an outflow hole. An indoor fan (31) is installed near the indoor heat exchanger (30). The indoor fan (31) sends air-conditioned air to the room.

An outflow hole of the expansion valve (40) is connected to the underground heat exchanger (50) (specifically, an entry section (80a) which will be described later). The expansion valve (40) expands refrigerant flowing from the indoor heat exchanger (30) to reduce the pressure of such refrigerant to a predetermined pressure level, and then discharges the refrigerant to the underground heat exchanger (50).

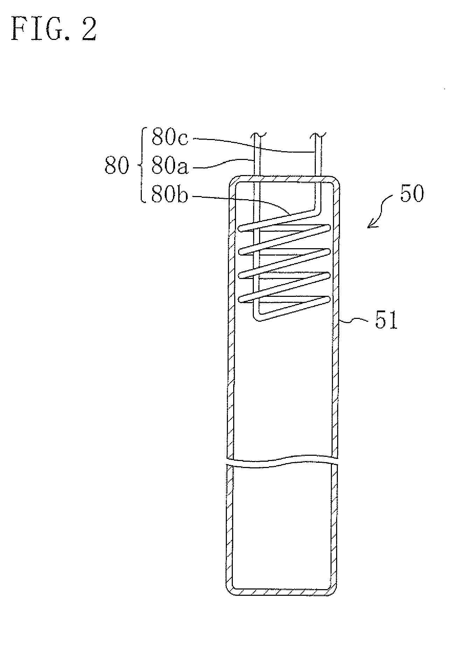

The underground heat exchanger (50) collects heat for the heating operation by using ground heat as a heat source. As illustrated in FIG. 2, the underground heat exchanger (50) includes an outer pipe (51) and a heating heat-transfer pipe (80).

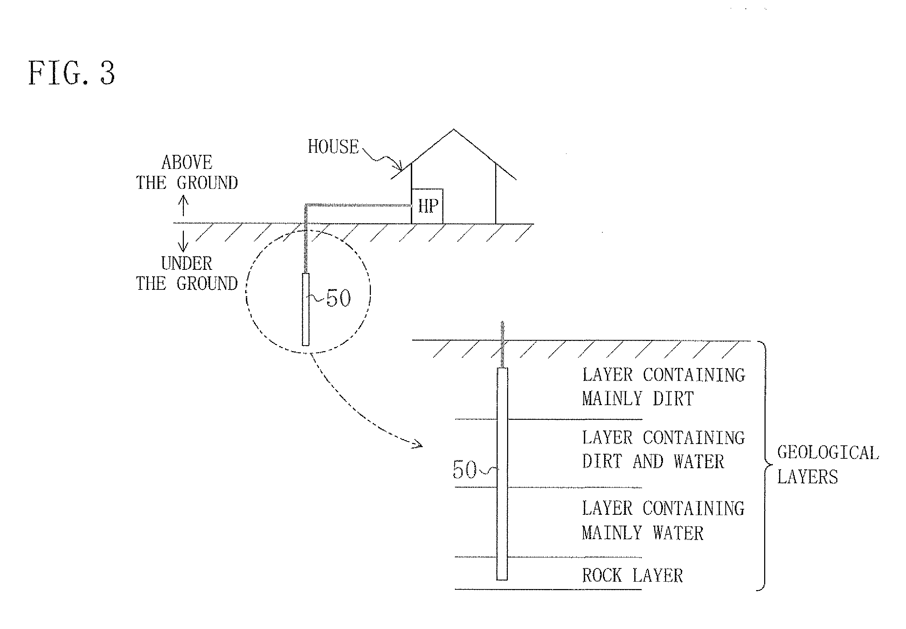

The outer pipe (51) is formed in tubular shape with closed ends, and is vertically buried under the ground in this example. For example, FIG. 3 is a view schematically illustrating a state in which the underground heat exchanger (50) is installed under the ground. A geological layer includes, e.g., a layer mainly containing dirt; a layer containing dirt and water; a layer mainly containing water; and a rock layer in which rocks are successively distributed. The underground heat exchanger (50) may be installed in any of the geological layers. FIG. 3 illustrates the state in which the underground heat exchanger (50) is installed so as to cross such layers, but, e.g., the underground heat exchanger (50) may be installed so that a heat exchange is performed only in any of the above-described layers.

A predetermined amount of carbon dioxide (CO2) is sealed in the outer pipe (51) as a heat medium. As described later, the heat medium is evaporated by absorbing heat from soil through an inner wall surface of the outer pipe (11), and is condensed by dissipating heat at an outer wall surface of the heating heat-transfer pipe (80) (specifically a body section (80b) which will be described later). A heat medium guiding section (52) (described later) for guiding the condensed heat medium to the inner wall surface of the outer pipe (51) by using surface tension of the heat medium or by reducing an angle of contact on the surface is formed in an upper section of the outer pipe (51).

The heating heat-transfer pipe (80) includes the entry section (80a), the body section (80b), and the exit section (80c).

The entry section (80a) is a pipe for injecting refrigerant into the body section (80b), and the exit section (80c) is a pipe for discharging refrigerant from the body section (80b). In the present embodiment, both of the entry section (80a) and the exit section (80c) are formed so as to be straight, and one end of each of the entry section (80a) and the exit section (80c) is inserted into the outer pipe (51) from above. In addition, both of the entry section (80a) and the exit section (80c) are connected to the body section (80b) inside the outer pipe (51).

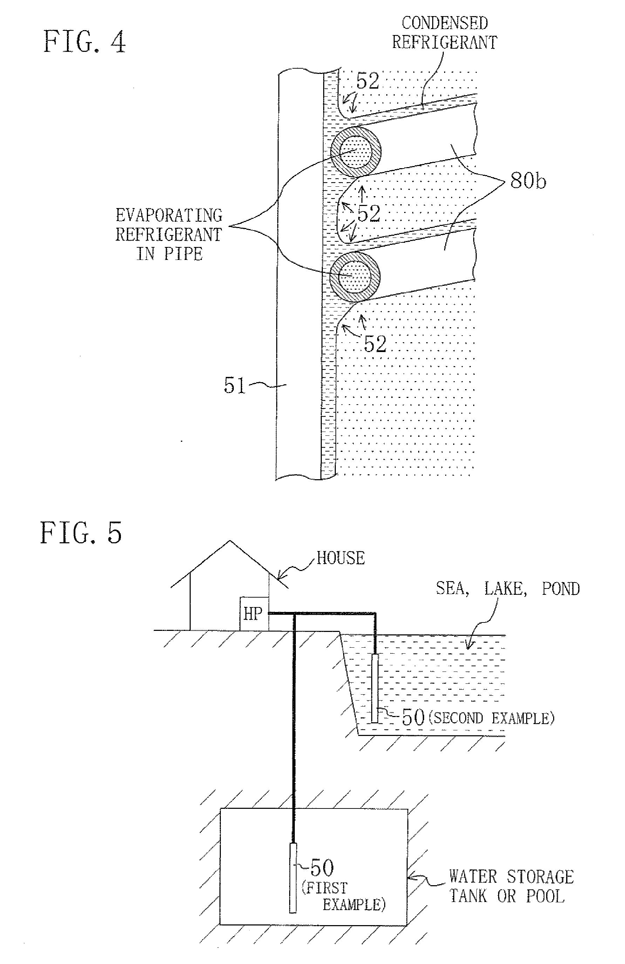

The body section (80b) exchanges heat with the heat medium flowing in the outer pipe (51), and then refrigerant injected into the body section (80b) is evaporated. In the present embodiment, the body section (80b) is formed in coiled shape, and is arranged in an upper section inside the outer pipe (51). As described later, the heat medium (vapor) is condensed on an outer surface of the body section (80b) in the heating operation. The body section (80b) defines the heat medium guiding section (52) for guiding the condensed heat medium to the inner wall surface of the outer pipe (51). Specifically, as illustrated in FIG. 4, an outer wall surface of the body section (80b) is arranged in proximity to the inner wall surface of the outer pipe (51). The condensed heat medium is attracted and guided to the inner wall surface of the outer pipe (51) between the wall surfaces by using the surface tension of the heat medium, and by reducing the angle of contact on the surface. A clearance is formed between the outer wall surface of the body section (80b) and the inner wall surface of the outer pipe (51), and the heat medium guided to the inner wall surface of the outer pipe (51) flows down along the inner wall surface through the clearance in the outer pipe (51).

### Operation

Next, a process in the heating operation in the air conditioning system (1) will be described.

First, when the refrigerant circuit (10) comes into operation, compressed refrigerant (gaseous refrigerant) is discharged through the discharge port of the compressor (20). Then, the refrigerant discharged from the compressor (20) is sent to the indoor heat exchanger (30). The refrigerant flowing into the indoor heat exchanger (30) dissipates heat to indoor air in the indoor heat exchanger (30). The indoor air is heated in the indoor heat exchanger (30), and then the heated indoor air is sent back to the room by the indoor fan (31). The refrigerant dissipating heat in the indoor heat exchanger (30) is sent to the expansion valve (40). The pressure of the refrigerant flowing into the expansion valve (40) is reduced when passing through the expansion valve (40), and then such refrigerant is sent to the body section (80b) through the entry section (80a) of the heating heat-transfer pipe (80). The injected refrigerant has two phases, i.e., gas-liquid phase.

In such a state, the heat medium is evaporated by ground heat in the outer pipe (51), and is present as vapor. When such vapor of the heat medium contacts the outer wall surface of the body section (80b), the heat medium is condensed because the body section (80b) absorbs its heat, and is changed into liquid. In the heat medium guiding section (52), the liquid heat medium is attracted between the outer wall surface of the body section (80b) and the inner wall surface of the outer pipe (51) by using the surface tension of the heat medium, and by reducing the angle of contact on the surface. The attracted heat medium is guided to the inner wall surface of the outer pipe (51), and then flows down along the inner wall surface through the clearance between the outer wall surface of the body section (80b) and the inner wall surface of the outer pipe (51). In particular, the body section (80b) is formed in coiled shape in the present embodiment, thereby ensuring a sufficient length of the heat medium guiding section (52). While the heat medium guided to the inner wall surface of the outer pipe (51) flows down along the inner wall surface, such a heat medium is adhered to and spreads on the inner wall surface, and forms a liquid film. The heat medium forming the liquid film is evaporated by absorbing ground heat from soil through the inner wall surface of the outer pipe (51).

On the other hand, the body section (80b) of the heating heat-transfer pipe (80) contacts the vapor of the heat medium flowing in the outer pipe (51). Refrigerant flowing in the body section (80b) is evaporated by absorbing heat from the vapor of the heat medium through the body section (80b). As described above, the underground heat exchanger (50) collects ground heat by using a change in phase of the heat medium flowing in the outer pipe (51).

The refrigerant evaporated in the body section (80b) of the heating heat-transfer pipe (80) is discharged to the compressor (20) through the exit section (80c). The compressor (20) sucks and compresses such refrigerant, and then discharges the refrigerant to the indoor heat exchanger (30) again. In the air conditioning system (1), the above-described process is repeated to perform a refrigeration cycle (heating operation in this example) in which the underground heat exchanger (50) serves as the heat source to compress refrigerant in the compressor (20).

As described above, according to the present embodiment, the heat medium condensed on the outer wall surface of the heating heat-transfer pipe (80) (body section (80b)) is guided to the inner wall surface of the outer pipe (51) by the heat medium guiding section (52), and then is adhered to and spreads on the inner wall surface. That is, a non-uniform flow of the heat medium and non-uniform moistening of the inner wall surface in a length direction (i.e., axial direction) of the outer pipe (51) can be reduced or prevented. Consequently, the liquid heat medium can be efficiently evaporated by contacting the inner wall surface of the outer pipe (51). This improves heat exchange capability in the underground heat exchanger (50), and such improvement allows a reduction in size of an underground heat exchanger. In addition, because of the reduction in size, a reduction in cost of an air conditioning system (heating system) can be expected.

### «Second Embodiment»

The heat exchanger (50) may be installed under the ground, as well as under water. An installation site specifically includes, e.g., the sea, a lake, a pond, a pool, a water storage tank, a river, and a sewage system. FIG. 5 is a view schematically illustrating a state in which a heat exchanger (50) is installed under water. In this figure, two examples (first and second examples) are illustrated as examples of installation of the heat exchanger (underwater heat exchanger) (50). The first example is an example in which the heat exchanger (50) is installed in a water storage tank or a pool. The second example is an example in which the heat exchanger (50) is installed in the sea, a lake, or a pond. Note that, in this figure, the "HP" means a body section of an air conditioning system (1) (section other than the heat exchanger) (the same holds true for the following).

When the heat exchanger (50) is installed under water, a heat exchanger is performed by the same mechanism similar to that of the foregoing embodiment.

### «Other Embodiments (Variations)»

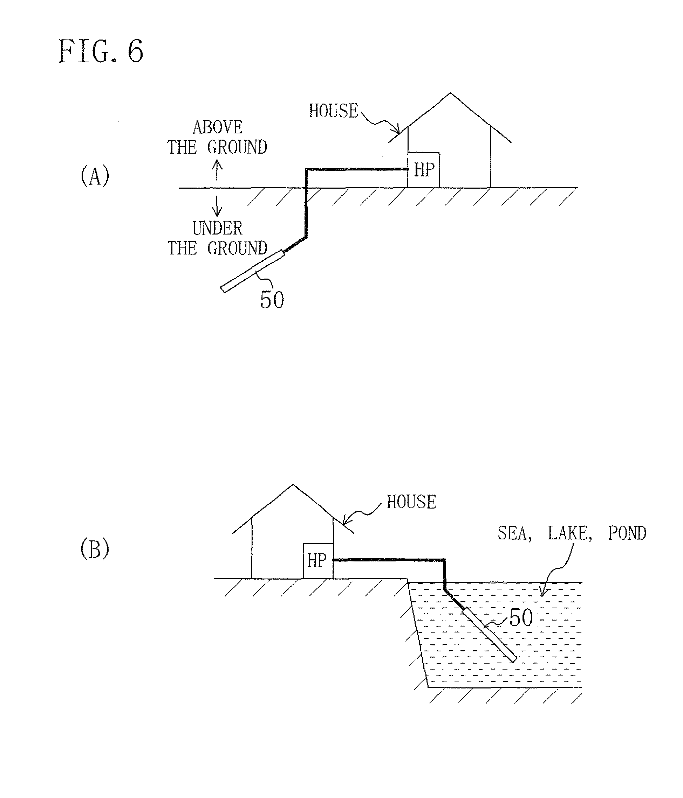

<1> The underground heat exchanger (50), i.e., the outer pipe (51) of the foregoing embodiments may be inclinedly installed under the ground or water. FIGS. 6(A) and 6(B) are views schematically illustrating a state in which a heat exchanger (50) is inclinedly installed. FIG. 6(A) illustrates an example in which the heat exchanger (50) is inclinedly installed under the ground, and FIG. 6(B) illustrate an example in which the heat exchanger (50) is inclinedly installed under water. FIG. 6(B) illustrates the example in which the heat exchanger (50) is inclinedly installed in the sea, a lake, or a pond. Similarly, the heat exchanger (50) may be inclinedly installed in, e.g., a water storage tank or a pool.

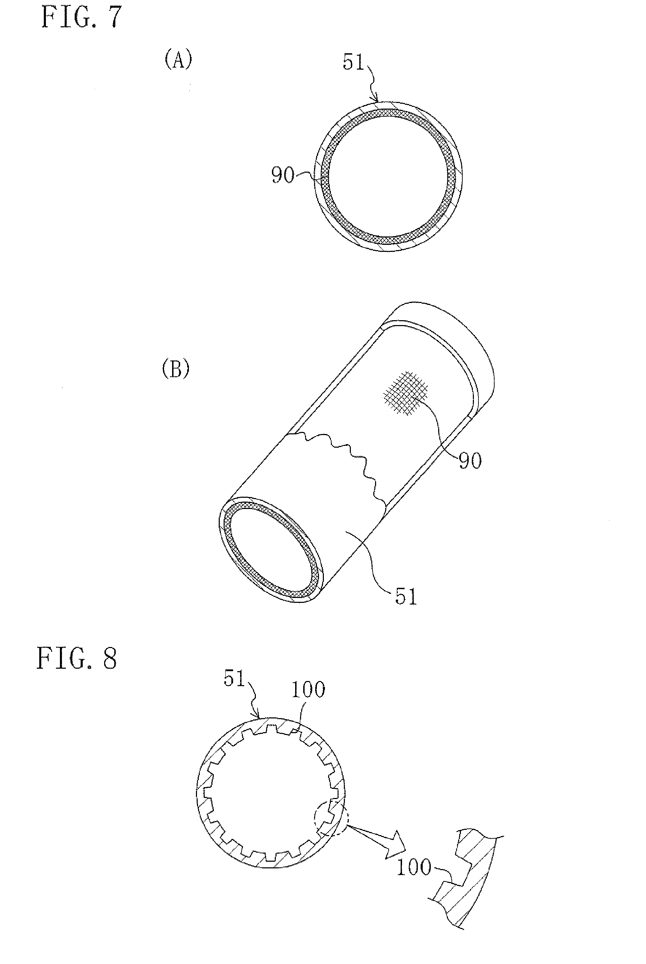

<2> As illustrated in FIGS. 7(A) and 7(B), a wick (90) may be provided on an inner wall surface of an outer pipe (51). A liquid heat medium inside the outer pipe (51) penetrates the wick (90), and is held by the wick (90). The wick (90) allows the held liquid refrigerant to contact the inner wall surface of the outer pipe (51). The wick (90) includes, e.g., an assembly of a porous metal body, porous ceramic, and fibers. The wick (90) is provided on the inner wall surface of the outer pipe (51) as described above, thereby ensuring uniform moistening of the inner wall surface of the outer pipe (51). Consequently, heat exchange capability is improved in a heating operation.

<3> As illustrated in a cross-sectional view of FIG. 8, a plurality of grooves (100) may be provided in an inner wall surface of an outer pipe (51). Specifically, the width, depth, and number of the grooves (100) are set so that a liquid heat medium inside the outer pipe (51) is held. A direction of the grooves (100) is not limited to a direction parallel to an axial direction of the outer pipe (51). For example, the grooves (100) may be formed in a circumferential direction, or may be helically formed. The grooves (100) are provided in the inner wall surface of the outer pipe (51), thereby ensuring uniform moistening of the inner wall surface of the outer pipe (51). Consequently, heat exchange capability is improved in a heating operation.

### INDUSTRIAL APPLICABILITY

The present invention is useful as the heat exchanger installed under the ground or water, and the air conditioning system using the heat exchanger.

### DESCRIPTION OF REFERENCE CHARACTERS

- 1: Air Conditioning System
- 50: Heat Exchanger
- 51: Outer Pipe
- 52: Heat Medium Guiding Section
- 80: Heating Heat-Transfer Pipe
- 90: Wick
- 100: Groove

## Claims

1. A heat exchanger, comprising:
an outer pipe (51) installed vertically or installed inclinedly under the ground or water;
a heating heat-transfer pipe (80) which is inserted into the outer pipe (51), and which evaporates refrigerant injected thereto; and
a heat medium sealed in the outer pipe (51),
wherein a heat exchange is performed by using a change in phase of the heat medium; and
the outer pipe (51) and the heating heat-transfer pipe (80) are arranged so that the liquid heat medium is guided between an inner wall surface of the outer pipe (51) and an outer wall surface of the cooling heat-transfer pipe (52).

2. The heat exchanger of claim 1, wherein
the heating heat-transfer pipe (80) is formed in coiled shape.

3. The heat exchanger of claim 1, wherein
a wick (90) is provided along the inner wall surface of the outer pipe (11) inside the outer pipe (51).

4. The heat exchanger of claim 1, wherein
grooves (100) for holding the heat medium by using surface tension of the heat medium or by reducing an angle of contact on the inner wall surface are formed in the inner wall surface of the outer pipe (51).

5. An air conditioning system, comprising:
the heat exchanger of claim 1,
wherein a refrigeration cycle is performed.
